Europäisches Patentamt

European Patent Office

Office européen des brevets

(11) Numéro de publication : **0 511 085 A1**

# (12) DEMANDE DE BREVET EUROPEEN

(21) Numéro de dépôt : **92401127.3**

(22) Date de dépôt : **22.04.92**

(51) Int. Cl.⁵ : **H02G 3/28, E04B 2/74**

(30) Priorité : **24.04.91 FR 9105037**

(43) Date de publication de la demande :
**28.10.92 Bulletin 92/44**

(84) Etats contractants désignés :
**AT BE CH DE DK ES FR GB GR IT LI LU NL PT SE**

(71) Demandeur : **Bense, Dominique**
**8 grande rue, Ormeaux**
**F-77590 Rozay-en-Brie (FR)**

(71) Demandeur : **Boivert, Marc**
**1 rue des Trembleaux**
**F-78000 Sartrouville (FR)**

(71) Demandeur : **Chalmin, Alain**
**4 allée des Tilleuls**
**F-92330 Sceaux (FR)**

(71) Demandeur : **Wagon, Luc**
**69 bd de la République**
**F-91450 Soisy/Seine (FR)**

(72) Inventeur : **Bense, Dominique**
**8 grande rue, Ormeaux**
**F-77590 Rozay-en-Brie (FR)**
Inventeur : **Boivert, Marc**
**1 rue des Trembleaux**
**F-78000 Sartrouville (FR)**
Inventeur : **Chalmin, Alain**
**4 allée des Tilleuls**
**F-92330 Sceaux (FR)**
Inventeur : **Wagon, Luc**
**69 bd de la République**
**F-91450 Soisy/Seine (FR)**

(74) Mandataire : **Lachat, Salomé**
**70, rue Fondary**
**75015 Paris (FR)**

(54) **Elément de cloison amovible.**

(57)    Un élément de cloison amovible, distributeur de fluides, se compose d'une paroi centrale (11) assemblée à deux compartiments de câbles (2) latéraux. La paroi frontale (11) comporte un orifice de circulation de l'air recouvert d'une grille (5), le diffuseur d'air (3) étant disposé derrière la paroi frontale (11). Les comparti- ments câbles (2) sont pourvus de platines de support (13) de l'appareillage courants forts et faibles. Les compartiments câbles (2) se composent d'un profil (12) en forme de L dont l'une des branches (16) comporte des rigoles (17), (18) et dont la branche (24) comporte une ailette (23), et, d'un couvercle (1), le profil (12) et le couvercle (1) étant assemblés par clipsage. Dans l'angle intérieur du profil (12) est prévue une rigole (22) destinée à un collier de maintien des câbles (21). Un couvre-joint (4) est clipsé sur la rigole (17) de la branche (16) du profil (12).
L'élément de cloison amovible est assemblé grâce à des profils porteurs standards (8) avec des éléments de cloison courants (9) et avec un élément de façade (7) pourvu d'une protection phonique (6).

Fig. 2

EP 0 511 085 A1

La présente invention est relative à un élément de cloison amovible, distributeur de fluides, pouvant être assemblé à des éléments de cloison usuels.

Jusqu'à présent, le montage des éléments de cloison usuels, notamment de cloisons intérieures de séparation de bureaux, implique que plus particulièrement les fonctions de distribution de courants électriques forts et faibles, de diffusion d'air, de fixation de luminaire soient assurées par des éléments de construction distincts, ce qui rend les équipements correspondants onéreux et peu flexibles.

Le courant électrique est généralement distribué par des plinthes ou des perches verticales. Ces types de constructions connus d'éléments de distribution du courant présentent plus particulièrement l'inconvénient de prévoir le logement des câbles de courants forts et faibles dans une même plinthe ou une même perche. La proximité des câbles de courants forts et faibles implique des interférences parasites. Ceci est d'autant plus gênant que l'équipement informatique est en augmentation constante dans les bureaux.

Pour éviter les inconvénients cités provenant notamment de l'installation séparée du diffuseur à ventilation d'air, des différents courants électriques et de l'absence de séparation du logement des câbles de courants forts et faibles, la présente invention a pour objet un élément de cloison de dimension standard qui puisse être installé aisément dans des espaces de bureaux en remplacement d'un élément de cloison quelconque d'une cloison amovible séparant deux bureaux ou de façon autonome dans des bureaux dits paysagés, et qui regroupe principalement les fonctions de distribution d'air, de courants forts et faibles et de fixation de luminaire tout en assurant une haute protection des câbles aux rayonnements électromagnétiques.

Pour atteindre ces objectifs, la présente invention propose un élément de cloison amovible, distributeur de fluides, pouvant être assemblé à des éléments de cloison usuels non équipés, qui comporte trois parties longitudinales assemblées latéralement, spécialisées dans l'apport de fluides d'un même côté ou non de la cloison.

La partie centrale ou paroi frontale de cet élément de cloison comporte en partie basse au moins un orifice de circulation de l'air recouvert d'une grille. L'orifice de circulation d'air recouvert par une grille peut être prévu également dans la partie basse du panneau de façade qui est assemblé avec l'élément de cloison proprement dit et qui fait face à ladite partie centrale ou paroi frontale de celui-ci.

Les parties latérales dudit élément sont constituées de canaux de logement de câbles appelés compartiments à câbles, permettant la distribution séparée des courants forts et faibles. Les canaux pour le logement des câbles présentent après fermeture de préférence une forme de pentagone presque symétrique. Ils se composent d'un profil de section transversale sensiblement en forme de L aux extrémités rabattues et d'un couvercle présentant également des extrémités rabattues. L'une des branches du profil en L comporte au moins une rigole ouverte vers l'extérieur, l'autre branche au moins une ailette saillante vers l'extérieur. Le profil en L et le couvercle sont assemblés par agrafage élastique réversible, en termes de métier clipsage, grâce à leurs extrémités rabattues. A la jonction entre les deux branches du profil en forme de L est prévue une rigole ouverte vers l'intérieur, dans laquelle est engagée par clipsage une bague de maintien des câbles.

D'autres détails de réalisation de l'invention sont proposés par les revendications 3 à 14.

L'invention sera décrite de façon purement indicative à l'aide des dessins annexés à titre d'exemple non limitatif.

La figure 1 est une vue en perspective d'une cloison comportant un élément conforme à l'invention.

La figure 2 est une coupe tranversale partielle d'un premier mode de réalisation d'un élément de cloison conforme à l'invention.

La figure 3 est une vue éclatée du profil constituant le compartiment à câbles.

La figure 4 est une coupe verticale de la partie inférieure d'un élément de cloison conforme à l'invention.

La figure 5 est une coupe verticale de la partie supérieure d'un élément de cloison conforme à l'invention.

La figure 6 est une coupe transversale d'un autre mode de réalisation de l'invention.

La figure 7 est une coupe verticale correspondant à la figure 6.

La figure 8 est une coupe transversale partielle d'un autre mode de réalisation d'un élément de cloison conforme à l'invention.

L'on trouvera in fine une nomenclature des différents repères utilisés au cours de la description.

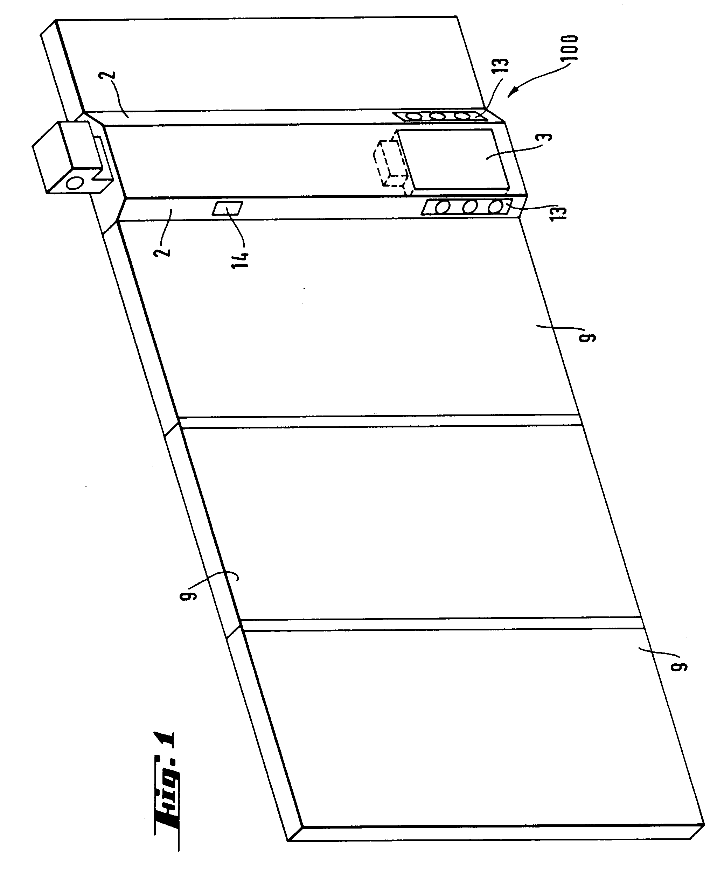

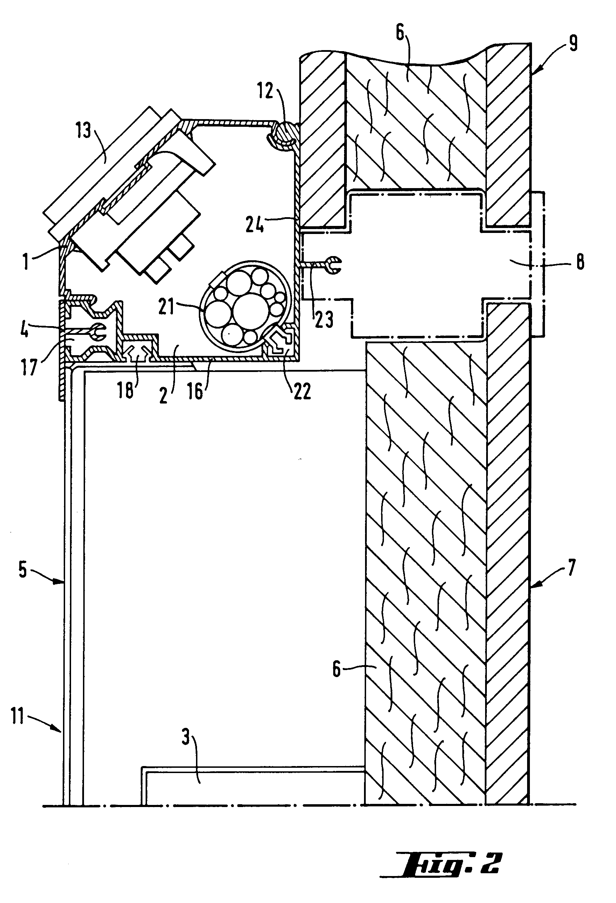

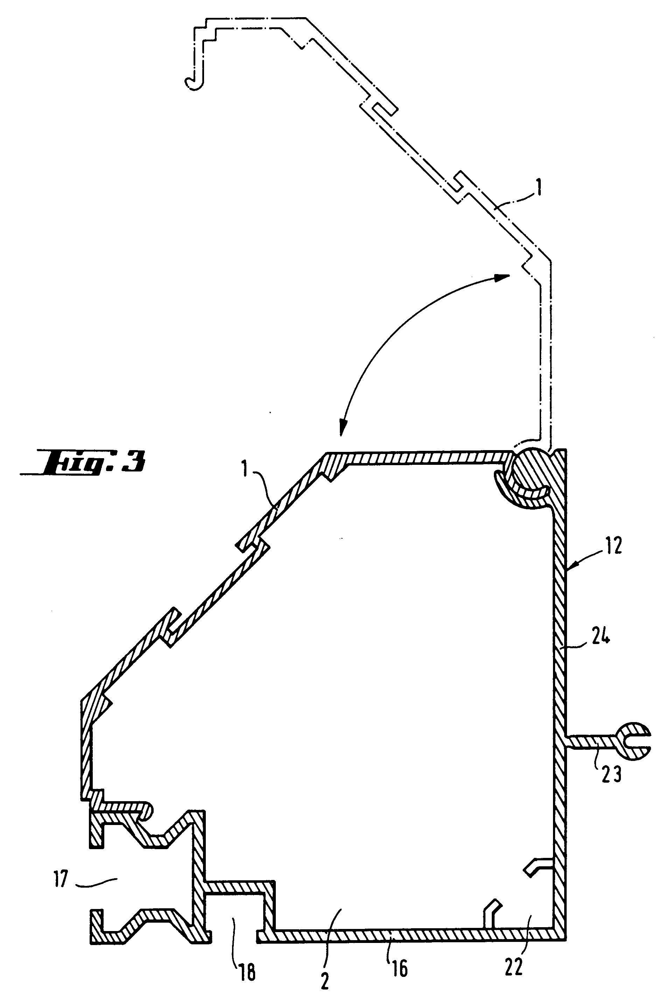

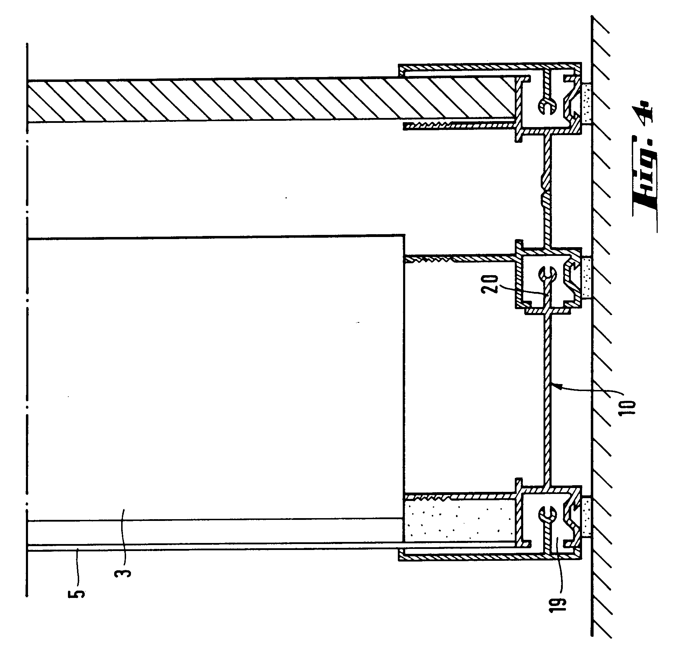

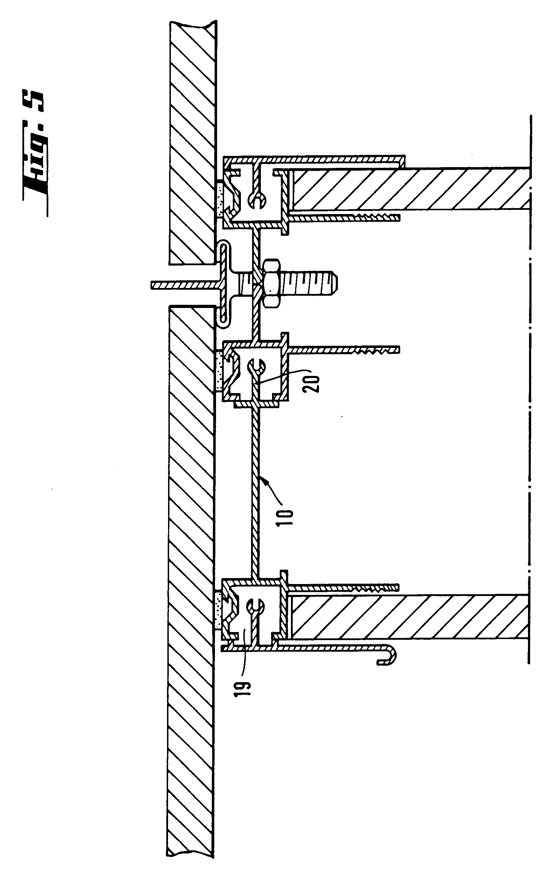

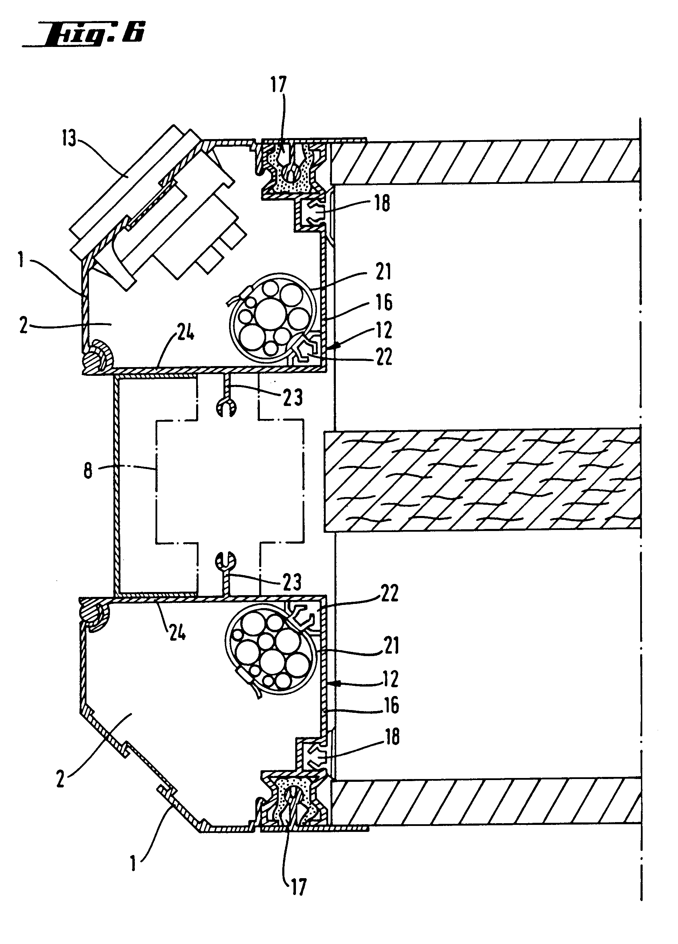

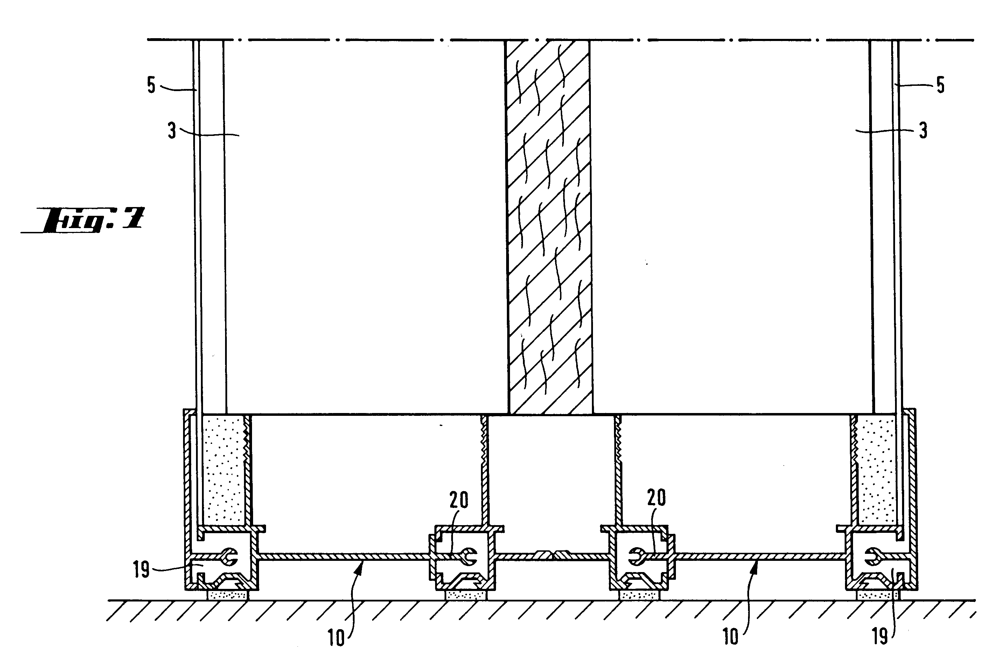

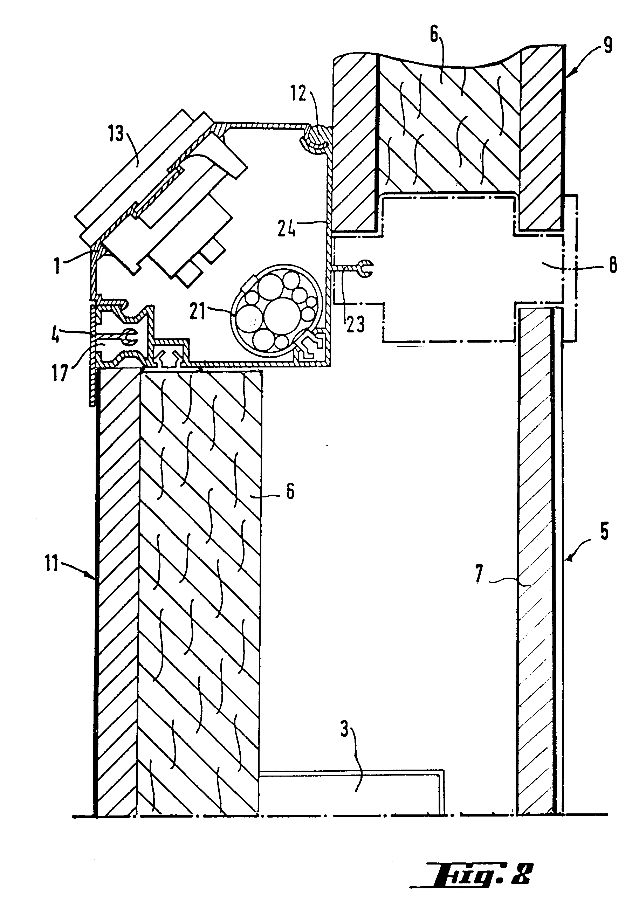

Les figures 1 à 5 montrent un mode de réalisation préférentiel d'un élément de cloison (100) amovible, distributeur de fluides, conforme à l'invention. Cet élément se compose essentiellement d'une paroi frontale (11) assemblées à deux compartiments à câbles latéraux (2), assemblés eux-mêmes à un panneau de façade (7).

La paroi frontale (11) peut être constituée d'un parement rigide préfabriqué (15) qui comporte dans sa partie inférieure au moins un orifice de circulation d'air recouvert d'une grille (5), par exemple en tôle d'acier galvanisée perforée. Le diffuseur d'air (3) pour une ventilation dite par déplacement d'air, qui est disposé entre la paroi frontale (11) et le panneau de façade (7), comporte dans la partie inférieure un caisson de détente et de répartition de l'air sur la grille. La partie supérieure de l'espace compris entre la paroi frontale (11) et le panneau de façade (7) est utilisée tel un conduit permettant d'acheminer l'air du caisson d'arrivée disposé dans la partie supérieure de la cloison vers le diffuseur (3). Il peut être prévu également que la paroi frontale (11) intègre un panneau de chauffage ou d'autres équipements tels des étagères.

Selon le mode de réalisation présenté, les deux compartiments à câbles latéraux (2) qui présentent après fermeture une forme de pentagône presque symétrique, se composent essentiellement d'un profil (12) d'aluminium, de section transversale sensiblement en forme de L, aux extrémités rabattues, dont l'une est conformée pour présenter des rigoles de fixation (17), (18), comme montré plus particulièrement à la figure 3. Lesdites extrémités permettent, d'une part, la mise en place par clipsage du couvercle démontable (1) aux extrémités rabattues, et, d'autre part, l'assemblage par clipsage de la paroi frontale (11) et desdits compartiments à câbles latéraux (2). Un couvre-joint (4) est clipsé sur la rigole frontale (17) de la branche (16) du profil (12). L'autre branche (24) du profil (12) comporte une ailette (23) saillante vers l'extérieur, permettant l'assemblage avec le profil porteur standard (8). Dans l'angle formé par les deux branches du profil (12), opposé au couvercle (1), est prévue une rigole (22), orientée vers l'intérieur, dans laquelle vient s'engager par clipsage un collier de maintien (21) des câbles. Les compartiments à câbles latéraux (2) sont pourvus dans leur partie inférieure de platines de support (13) de l'appareillage courants forts et faibles et dans leur partie supérieure d'au moins une platine de support de luminaire (14).

Comme les couvercles (1) des compartiments à câbles latéraux (2) sont démontables, le raccordement sur place ou un échange sont très aisés.

L'élément de cloison amovible (100) conforme à l'invention comporte ainsi deux compartiments à câbles indépendants, distants l'un de l'autre d'environ 50 cm. Cette disposition permet de loger d'un côté les câbles de courants forts et de l'autre côté les câbles de courants faibles ce qui évite toute interférence parasite due à la proximité de ces câbles. Contrairement aux solutions courantes, l'élément de cloison (100) conforme à l'invention assure une haute protection des rayonnements électromagnétiques, les différents câbles étant parfaitement séparés.

Les deux parties ou platines (13) démontables qui supportent l'appareillage courants forts et faibles, sont avantageusement précâblées en atelier afin d'arriver tout équipées sur le chantier où il ne restera plus qu'à effectuer le raccordement sur la distribution prévue à cet effet.

L'élément de cloison (100) conforme au mode de réalisation présenté aux figures 1 à 4 est légèrement saillant, par exemple d'environ 10 cm, sur le plan des éléments de cloison usuels (9) avec lesquels il est assemblé par l'intermédiaire de profils porteurs verticaux standards (8). Les compartiments à câbles latéraux (2) forment des chanfreins entre la paroi frontale (11) et lesdits éléments de cloison usuels (9).

Comme on peut le voir sur les figures 1 à 5, le panneau de façade (7) de l'élément de cloison (100) est identique à ceux des éléments de cloison usuels (9) et comporte une protection phonique (6) constituée par exemple d'une couche de laine minérale à haute densité et stabilisée.

Comme montré aux figures 6 et 7, le panneau de façade (7) peut être remplacé par un second élément de cloison (100) équipé, conforme à l'invention, les deux éléments de cloison (100) étant disposés dos à dos et assemblés grâce à des profils porteurs standards (8) de façon à former un élément de cloison double. Ce dernier est d'utilisation particulièrement avantageuse dans des bureaux dits paysagés.

A ses extrémités inférieure et supérieure, l'élément de cloison (100) est assemblé à des profils standards horizontaux de cloison usuelle grâce à des embouts adaptateurs (10), comme on peut le voir aux figures 3 et 4 notamment. Lesdits embouts adaptateurs présentent une section transversale en forme de L. A la jonction entre les deux branches du L est prévue sur la branche verticale du L une rigole (19) ouverte vers l'extérieur, présentant une configuration connue en soi. La branche horizontale du L comporte une extrémité libre en forme de croix (20) coopérant avec une rigole d'un profil standard et dont la barre transversale peut venir, après assemblage, en butée sur ladite rigole.

La figure 8 montre une variante de réalisation de l'élément de cloison amovible conforme à l'invention. Selon cette variante de réalisation, l'orifice de circulation de l'air recouvert d'une grille (5) est prévu dans la partie basse du panneau de façade (7) qui est assemblé avec l'élément de coison (100) grâce à des profils porteurs standards (8) et qui fait face à la partie centrale ou paroi frontale de celui-ci. Dans le cadre de cette variante de réalisation, la protection phonique (6) est prévue du côté de la partie centrale ou paroi frontale ( 11 ) de l'élément de cloison (100). Tous les autres détails de réalisation explicités pour le mode de réalisation présenté aux figures 1 à 5 s'appliquent également à la variante de réalisation montrée à la figure 8.

Selon un autre mode de réalisation de l'invention, l'élément de cloison (100) est disposé dans le même plan que les éléments de cloison usuels (9) adjacents, avec lesquels il est assemblé grâce à des profils porteurs standards (8). Les compartiments à câbles latéraux (2) sont constitués de profils de section transversale sensiblement en forme de U fermés par un couvercle démontable mis en place par clipsage. Les couvercles démontables sont équipés de façon identique à ceux de l'élément de cloison conforme au mode de réalisation décrit précédemment.

Dans le cadre de la présente invention, l'élément de cloison (100) peut indifféremment être assemblé sur le chantier ou être livré achevé tel un terminal monobloc réalisé en usine.

## NOMENCLATURE

1 couvercle du profil (12)
2 canaux de logements de câbles appelés compartiments à câbles
3 diffuseur d'air
4 couvre-joint
5 grille du diffuseur d'air
6 protection phonique
7 panneau de façade
8 profil porteur standard
9 élément de cloison usuel
10 embout adaptateur
11 paroi frontale
12 profil en L
13 platine support de l'appareillage courants forts et faibles
14 platine support de luminaire
15 parement rigide préfabriqué
16 branche du profil (12)
17 rigole frontale du profil (12)
18 rigole du profil (12)
19 rigole de l'embout adaptateur (10)
20 extrémité en forme de croix de l'embout adaptateur (10)
21 collier de maintien de câbles
22 rigole du profil (12)
23 ailette de la branche (24)
24 branche du profil (12)
100 élément de cloison

## Revendications

**1.** Elément de cloison, amovible, distributeur de fluides, pouvant être assemblé à des éléments de cloison usuels non équipés, *caractérisé par* trois parties longitudinales assemblées latéralement, spécialisées dans l'apport de fluides d'un même côté ou non de la cloison, dont la partie centrale ou paroi frontale (11) comporte en partie basse au moins un orifice de circulation d'air recouvert par une grille (5), et, dont les parties latérales qui sont constituées de canaux pour le logement de câbles (2) ou compartiments à câbles, permettent la distribution séparée des courants forts et faibles.

**2.** Elément de cloison, amovible, distributeur de fluides, pouvant être assemblé à des éléments de cloisons usuels non équipé, *caractérisé par* trois parties longitudinales assemblées latéralement, spécialisées dans l'apport de fluides d'un même côté ou non de la cloison, dont les parties latérales qui sont constituées de canaux pour le logement de câbles (2) ou compartiments de câbles, permettent la distribution séparée des courants forts et faibles, au moins un orifice de circulation d'air recouvert par une grille (5) étant prévu dans la partie basse du panneau de façade (7) assemblé avec l'élément de cloison grâce à des profils porteurs standards (8) et faisant face à la partie centrale ou paroi frontale (11) de celui-ci.

**3.** Elément de cloison selon les revendications 1 ou 2 *caractérisé en ce que* les canaux pour le logement des câbles (2) qui présentent après fermeture une forme de pentagône sensiblement symétrique comprenant trois dièdres droits consécutifs, se composent, d'une part, d'un profil (12) de section transversale sensiblement en forme de L aux extrémités rabattues, dont l'une des branches (16) comporte au moins une rigole (17), (18), ouverte vers l'extérieur et dont l'autre branche (24) comporte au moins une ailette (23) saillante vers l'extérieur, et, d'autre part, d'un couvercle amovible (1) aux extrémités rabattues, le profil (12) et le couvercle (1) étant assemblés par clipsage grâce à leurs extrémités rabattues.

**4.** Elément de cloison selon la revendication 3 *caractérisé en ce que* le profil (12) comporte dans son angle opposé au couvercle (1) une rigole (22) ouverte vers l'intérieur, dans laquelle vient s'engager par clipsage un collier de maintien (21) des câbles.

**5.** Elément de cloison selon la revendication 4 *caractérisé en ce que* le profil (12) est assemblé par clipsage, d'une part, avec la paroi frontale (11) grâce à ses extrémités rabattues et ses rigoles (17), (18) et, d'autre part, avec le profil porteur standard (8) grâce à l'ailette (23), un couvre-joint (4) étant clipsé sur la rigole frontale (17) de la branche (16) du profil (12).

**6.** Elément de cloison selon au moins l'une des revendications 1 à 5 *caractérisé en ce que* les compartiments à câbles latéraux (2) comportent dans leur partie inférieure des platines supports de l'appareillage courants forts et faibles (13) et dans leur partie supérieure au moins une platine support de luminaire (14).

**7.** Elément de cloison selon au moins l'une des revendications 1 à 6 *caractérisé en ce qu'*il est légèrement saillant sur le plan des éléments de cloison usuels (9) avec lesquels il est assemblé grâce à des profils porteurs standards (8) et *en ce que* les compartiments à câbles latéraux (2) forment des chanfreins entre la paroi frontale (11) et lesdits éléments de cloison usuels (9).

**8.** Elément de cloison selon au moins l'une des revendications 1 ou 7 *caractérisé en ce qu'*il est disposé dans le même plan que les éléments de cloison usuels (9) avec lesquels il est assemblé grâce à des profils porteurs standards (8) et *en ce que* les compartiments à câbles latéraux (2) sont constitués de profils de section transversale sensiblement en forme de U fermés chacun par un couvercle amovible.

**9.** Elément de cloison selon au moins l'une des revendications 1 à 8 *caractérisé en ce qu'*il est assemblé à ses extrémités inférieure et supérieure avec des profils standards de cloison usuels grâce à des embouts adaptateurs (10) de section transversale en forme de L, dont la branche verticale comporte à la jonction entre les deux branches une rigole (19) ouverte vers l'extérieur, et dont la branche horizontale comporte une extrémité en forme de croix (20) coopérant avec une rigole d'un profil standard, la barre transversale de ladite croix pouvant venir en butée après assemblage sur ladite rigole de profil standard.

**10.** Elément de cloison selon au moins l'une des revendications 1 et 3 à 9 *caractérisé en ce qu*'il est assemblé avec un panneau de façade (7) pourvu d'une protection phonique (6) grâce à des profils porteurs standards (8).

**11.** Elément de cloison selon au moins l'une des revendications 2 à 9 *caractérisé en ce que* la protection phonique (6) est disposée du côté de la partie centrale ou paroi frontale (11).

**12.** Elément de cloison selon au moins l'une des revendications 1 et 3 à 9 *caractérisé en ce qu*'il est assemblé, grâce à des profils porteurs standards (8), avec un autre élément de cloison identique servant de panneau de façade arrière de façon à former un élément de cloison double.

**13.** Elément de cloison selon les revendications 1 à 12 *caractérisé en ce que* les profils, les couvercles et les couvre-joints sont de préférence en aluminium.

**14.** Elément de cloison selon les revendications 1 à 13 *caractérisé en ce qu*'il peut être assemblé sur le chantier ou être livré achevé en tant qu'élément préfabriqué.

Fig. 1

*Fig. 2*

**Fig.3**

Fig. 4

Fig. 5

EP 0 511 085 A1

## Fig. 6

Fig. 7

EP 0 511 085 A1

Fig. 8

Office européen
des brevets

# RAPPORT DE RECHERCHE EUROPEENNE

Numero de la demande

EP    92 40 1127

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 862 659 (WILSON ET AL.) <br> * colonne 4, ligne 7 - colonne 6, ligne 16; figures 1,2,3,4,7 * <br> --- | 1,6 | H02G3/28 <br> E04B2/74 |
| A | US-A-4 360 705 (ROGERS) <br> * colonne 2, ligne 38 - ligne 62; figure 7 * <br><br> ----- | 1 | |
| | | | DOMAINES TECHNIQUES RECHERCHES (Int. Cl.5) <br><br> E04B <br> H02G |

Le présent rapport a été établi pour toutes les revendications

| Lieu de la recherche | Date d'achèvement de la recherche | Examinateur |
|---|---|---|
| LA HAYE | 16 JUILLET 1992 | MYSLIWETZ W.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P0402)